# EUROPEAN PATENT APPLICATION

(11) **EP 1 039 670 A2**
(43) Date of publication of application: **27.09.2000**
(21) Application number: 00302034.4
(22) Date of filing: 14.03.2000
(51) Int. Cl.: H04J 14/02

(54) **Wavelength division multiplexed system for optical access rings**

(30) Priority: 22.03.1999 US 274199
(71) Applicant: LUCENT TECHNOLOGIES INC., Murray Hill, New Jersey 07974-0636 (US)
(72) Inventor: Fatehi, Mohammad Taghi, Middletown, New Jersey 07748 (US); La Roche, Humberto Jose, Wayside, New Jersey 07712 (US); Sohraby, Kazem Anarky, Lincroft, New Jersey 07738 (US)
(74) Representative: Watts, Christopher Malcolm Kelway, Dr.

(57) **Abstract**

A Wavelength Division Multiplexed (WDM) ring architecture includes central node which generates a plurality of continuous wave (unmodulated) optical wavelengths which are sent as a WDM signal over an optical facility to a plurality of access nodes of the system. At the access nodes, one or more of these unmodulated optical wavelengths are demultiplexed from the WDM signal received over the optical facility and modulated with the user's or customer's signals and then multiplexed to the WDM signal on the optical facility.

## Description

### Technical Field of the Invention

This invention relates to Wavelength Division Multiplexed (WDM) systems and, more particularly, to a method of and apparatus for a WDM optical access ring.

### Background of the Invention

Dense Wavelength Division Multiplexed (DWDM) optical transport technology has revolutionized the telecommunication industry. With the advent of wide-band fiber optical amplifiers, DWDM optical transmission systems are currently capable of providing capacities in excess of hundreds of Gb/s over hundreds of kilometers on a single pair of fibers in long-haul networks. The DWDM revolution is now being extended from the long-haul networks into short-haul markets such as the Metro Inter-Office (also IOF) and Metro Access Networks. Further adding to this DWM revolution is the fact that telephone companies are experiencing a strong and consistent growth in the demand for bandwidth. Today's customers demand cheaper voice services and an increasing variety of data services, including fax, data, video, and internet services. There are three primary motivations for extending the deployment of WDM (including DWDM) networks into the short-haul networks. These are (1) efficiencies in transport through deployment of packet or cell based transport directly on a wavelength, (2) reduction/elimination of time division multiplexed (TDM) optical signaling equipment, and (3) providing higher bandwidth to the user.

What is needed is a WDM network architecture that fully utilizes the enormous capacity of WDM in short-haul networks or rings. The hope is that the WDM network will provide seamless connectivity from long-haul networks to metropolitan area networks, to access networks, and ultimately to the user's desk top.

### Summary of the Invention

One of the problems in extending Wavelength Division Multiplexed (WDM) capability to short-haul networks is the need to provide accurate, cost effective lasers at remote access nodes where environmental conditions vary widely. In accordance with the method and apparatus of the present invention, we have developed a WDM ring architecture where a plurality of carrier wave (unmodulated) optical wavelengths generated at a central node are transmitted as a WDM signal over an optical facility to the remote access nodes of the system. At the access nodes, one or more of these unmodulated optical wavelengths are demultiplexed from the WDM signal received over the optical facility and modulated with the users or customer's signals and then multiplexed onto the WDM signal on the optical facility.

In one embodiment of our invention, a wavelength division multiplexed (WDM) ring system includes a central node and one or more access nodes connected over an optical fiber facility. At the central node, a transmitter unit transmits a plurality of unmodulated optical wavelengths over the facility to the at least one access node and a receiver unit receives a plurality of node modulated optical wavelengths over the facility from the access node(s), the plurality of node modulated optical wavelengths being unmodulated optical wavelengths that have been modulated at one of the at least one access node. Each of the at least one access node includes (1) an optical add/drop multiplexer for receiving at least one of the unmodulated optical wavelengths of said first group transmitted by the central and for transmitting at least one of the node modulated optical wavelengths and (2) a modulator for modulating the at least one of the node modulated optical wavelengths to form the at least one of the node modulated optical wavelengths.

In accordance with other aspects of our invention, the central node also (1) receives modulated optical wavelengths from outside the WDM ring system and transmits them to the access node(s), (2) generates a supervisory signal(s) that are also sent to the access node(s), and (3) generates optical pump signals for pumping optical amplifiers of the optical facility. According to another feature the central node includes a controller for controlling the number and wavelength assignments of the unmodulated optical wavelength(s) used in the system. The access node(s) may also include a transponder implemented using a variety of electrical/optical or optical/optical modulators for modulating customer electrical and optical signals, respectively, onto the unmodulated optical wavelength(s). The central and access node(s) may be implemented using a variety of Optical Add/Drop multiplexers (OADMs).

### Brief Description of the Drawings

In the drawings,
Fig. 1 shows an illustrative block diagram of a wavelength division multiplexed (WDM) system including a WDM access ring useful in describing the operation of the present invention;
Fig. 2 shows, an illustrative block diagram of a prior art hub node and a WDM access ring including a plurality of access nodes;
Fig. 3 shows, an illustrative block diagram of a hub node and a WDM access ring including a plurality of access nodes, in accordance with the present invention;
Fig. 4 shows, a more detailed block diagram of the access node of Fig.3 for providing access to the service and protection paths of the WDM access ring;
Fig. 5 shows, in accordance with the present invention, an illustrative block diagram of an amplified WDM access ring including hub based pumping;
Fig. 6 shows, illustratively, a prior art embodiment of an electrical/optical transponder;
Fig. 7 shows, illustratively, an embodiment of a prior art optical/optical transponder;
Fig. 8 shows, illustratively, a second embodiment of a prior art optical/optical transponder;
Fig. 9 shows, illustratively, a prior art programmable optical add/drop multiplexer (OADM);
Fig. 10 shows, in accordance with the present invention, an illustrative embodiment of an electrical/optical transponder having complementary outputs;
Fig. 11 shows, in accordance with the present invention, a first and second illustrative embodiment of an optical/optical transponder having complementary outputs; and
Fig. 12 shows, in accordance with the present invention, a third illustrative embodiment of an optical/optical transponder having complementary outputs.

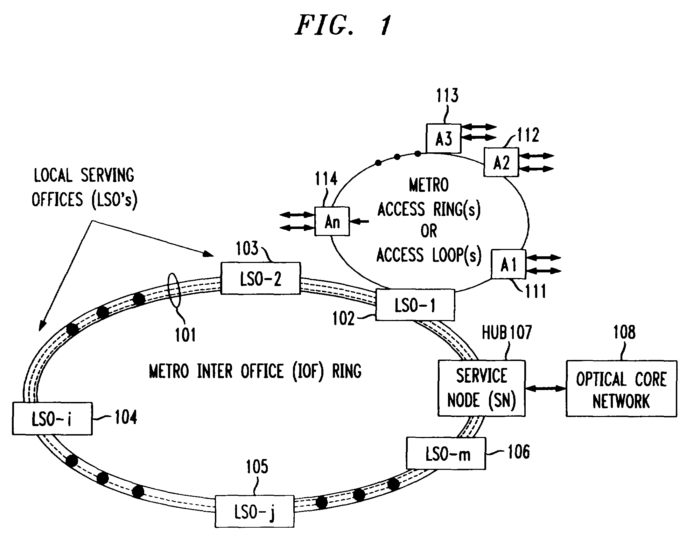

In the following description, identical element designations in different figures represent identical elements. Additionally in the element designations, the first digit refers to the figure in which that element is first located (e.g., 109 is located in FIG. 1).

### Detailed Description

With reference to Fig. 1, there is shown an illustrative block diagram of a typical metropolitan area optical network (MAN) useful in describing the operation of the present invention. Shown in Fig. 1, the MAN includes a high capacity backbone DWDM ring 101 (also referred to a Metro Inter Office (IOF) ring) which interconnects Local Serving Offices (LSOs) 102 -106 to a Service Node (SN) 107. The LSOs 102 - 106 are typically Central Offices (CO) of a telephone company. The SN 107 connects the IOF ring 101 to the DWDM long-haul (core) network 108. Clearly, given sufficient number of wavelengths and allowing wavelength reuse, Metro IOF rings can provide full mesh-type connectivity among all LSO's. A Metro Access ring or loop 110 connects to a plurality of access terminals (A1- An) 111 - 114 to the IOF ring 101. The access ring 110 collects traffic from and distributes traffic to the various users connected to the access terminals 111 - 114. In the prior art, the access ring 110 was typically a SONET (synchronous optical network) ring which used time division multiplexed (TDM) optical signaling. While such SONET rings perform well, as previously discussed, the strong and consistent growth in the demand for bandwidth has outgrown the SONET ring capacity. As a result, there is a desire to extend, at the lowest cost possible, the enormous capacity and protocol independence of WDM into these short-haul ring networks so as to provide seamless connectivity from long-haul networks 108 to metropolitan area networks 101, to access networks 110, and ultimately to the user's desk top. Additionally, there is a desire to provide a technology that is more suitable to handle the new services, such as Internet connectivity.

In accordance with the method and apparatus of the present invention, we have developed a low-cost WDM access ring 110 which extends optical wavelength signals to the users location 111 - 113, thus avoiding the bottleneck of electronic signal processing and also solving the fiber exhaustion problem. In this specification, the term WDM is used interchangeably with DWDM. In accordance with the method and apparatus of the present invention, we have developed a WDM ring architecture where a plurality of unmodulated optical wavelengths generated at a central node (LSO) are sent over an optical facility to the remote access nodes of the system. At the access nodes (or terminals), one or more of these unmodulated optical wavelengths are obtained from the optical facility, modulated with the users electrical/optical signals, and sent over the optical facility.

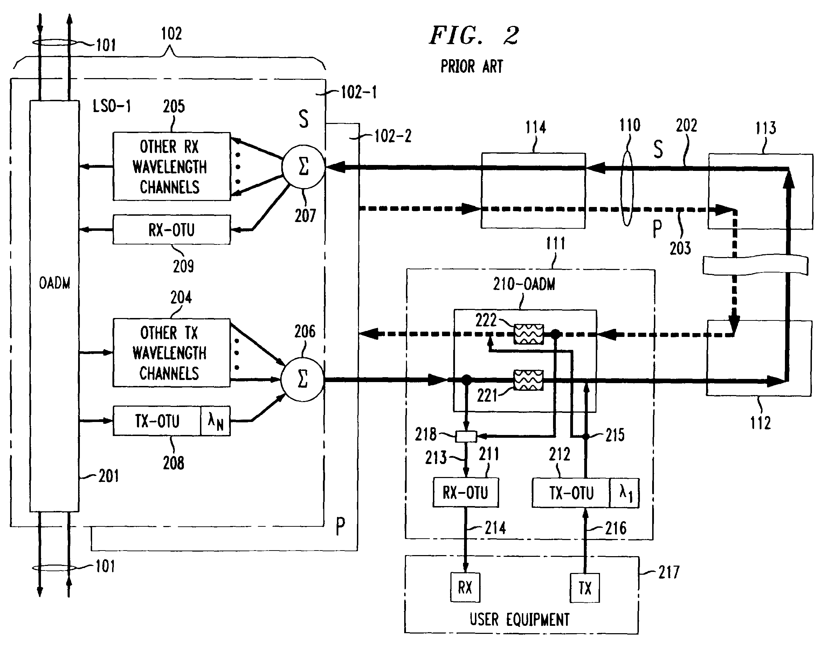

Shown in Fig. 2 is an illustrative block diagram of a prior art hub node LSO-1, 102, (referred hereinafter as LSO 102) and a WDM access ring 110. The LSO 102, illustratively, includes a service (S) path unit 102-1 and a protection (P) path unit 102-2 which each include an optical add/drop multiplexer (OADM) 201 to couple the appropriate wavelength(s) to and from the WDM signal on IOF ring 101. Note that while the SONET arrangement adds/drops time slots all at the same wavelength, WDM ring arrangements would add/drop multiple wavelengths at the access nodes. Thus, the prior art WDM arrangement of Fig.2 includes a Transmit Optical Translator Unit (TX-OTU) 208 and a Receive Optical Translator Unit (RX-OUT) 209, respectively, to convert or translate the add/drop wavelength to the selected modulated wavelength λ_{N} used by the WDM arrangement. The TX- and RX-OTUs for translating the other add/drop wavelengths are shown as 204 and 205, respectively. The wavelength multiplexer 206 combines the wavelengths for transmission over access ring 110. The demultiplexer 207 separates the wavelengths received over access ring 110.

The IOF ring 110 is typically a two-fiber or four-fiber ring that provides a service (S) and a protection (P) path connection to the access nodes or terminals 111 - 114. The protection path 203 provides, in a well known manner, an alternate connection path in the event of a node failure or a fiber break in ring 110. Illustratively in the prior art, access terminal 111 is shown to include an Optical Add/Drop Multiplexer (OADM) unit 210 including two OADMs 221 and 222, RX-OTU 211 and TX-OTU 212. The switch unit 218 enables RX-OTU 211 to connect to either the service path 202 or the protection path 203 depending on the signal quality. The RX-OTU 211 is used to translate the modulated drop wavelength 213 (obtained from either the service ring 202 or the protection ring 203) to a non-compliant optical signal 214 used by the user's or customer's equipment 217. For example, the user's non-compliant optical signal 214 can be a modulated wavelength that is different from the drop wavelength 213 (such as 1.3 µm wavelength used in a short-reach optical system), the same wavelength as the drop wavelength 213 but less stable, or may even be a modulated Light Emitting Diode (LED) signal. The TX-OTU 212 is used to translate a non-compliant optical signal 216 used by the user's or customer's equipment 217 to the modulated add wavelength 215 to be added to the service ring 202 and protection ring 203 of access ring 110.

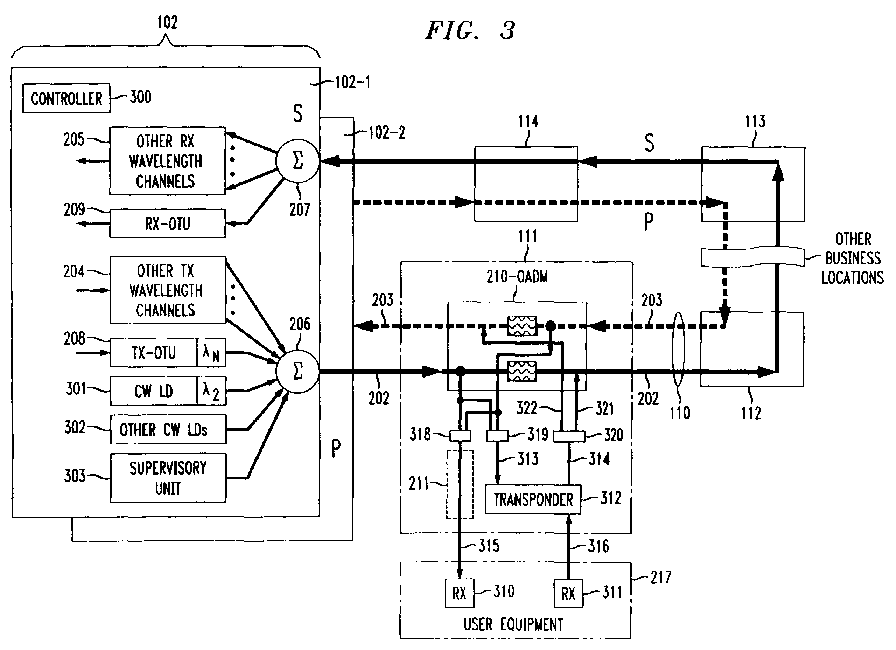

Fig. 3 shows, an illustrative block diagram of a hub (or central) node, in accordance with the present invention, connected to a WDM access ring 110. With joint reference to Figs. 2 and 3, we contrast the difference between the prior art arrangement and the present invention. The main difference between Fig. 2 and Fig. 3 is that in Fig. 2 the optical wavelength λ_{N} which is used by TX-OTU 212 at access terminal 111 is generated at access terminal 111, whereas in Fig. 3 a continuous wave CW (unmodulated) optical wavelength λ_{N} is provided over fiber path 202 by a laser unit CW LD 301 at hub node 102. In a similar manner, the other CW wavelengths used by access ring 110 are generated by laser unit 302. The CW wavelengths generated by lasers 301 - 302 are sent unmodulated to access terminal 111 - 114 where they are modulated, using user provided signals, and sent to and received by the RX-OTUs 209, 205. Additionally, one or more unique wavelengths may be provided for each access terminal 111 - 114. The CW wavelengths generated by lasers 301 -302 will be different than the drop wavelengths used by TX-OTUs 202, 204 to deliver data to access terminals 111 - 114. These CW wavelengths are combined with the drop wavelengths from TX-OTUs 202, 204, in multiplexer 206, and sent over access ring 110.

In hub 102, a similar set of equipment 120-2, which is a duplicate of the equipment shown in 102-1, provides both the source signals and all CW signals for the protection ring 203.

In operation, each access terminal 111 - 114, receives its assigned one or more unique modulated wavelengths and its assigned one or more unique CW wavelength signals. The switch units 318 and 319 enable RX-OTU 211 and transponder 312, respectively, to connect to either the service path 202 or the protection path 203, depending on the signal quality. As was described in Fig. 2, the modulated signal 314 is split (bridged) in splitter 320 and added to both the service path 202 and protection path 203. According to one feature of our invention, the modulated optical wavelength signal is outputted directly to the user's receiver (RX) 310 for demodulation. The modulated wavelength signal may also be demodulated, by RX-OTU 211, into an electrical signal 315 which is outputted to the user's receiver (RX) 310. The CW wavelength 313 is demultiplexed off the access ring 110 by OADM 210. The CW wavelength 313 is then modulated, in transponder 312, with the user's transmit signal 316 from user equipment transmitter (TX) 311 and the modulated signal 314 is sent over the service path and/or the protection path of the access ring 110. Since each access terminal 111 - 114 uses unique wavelengths, they do not interfere with each other. Note, when communications between access terminals on the same ring is desired, a supervisory channel informs the receiving terminal to add the wavelength of transmitting terminal to its list of received wavelengths (in its OADM).

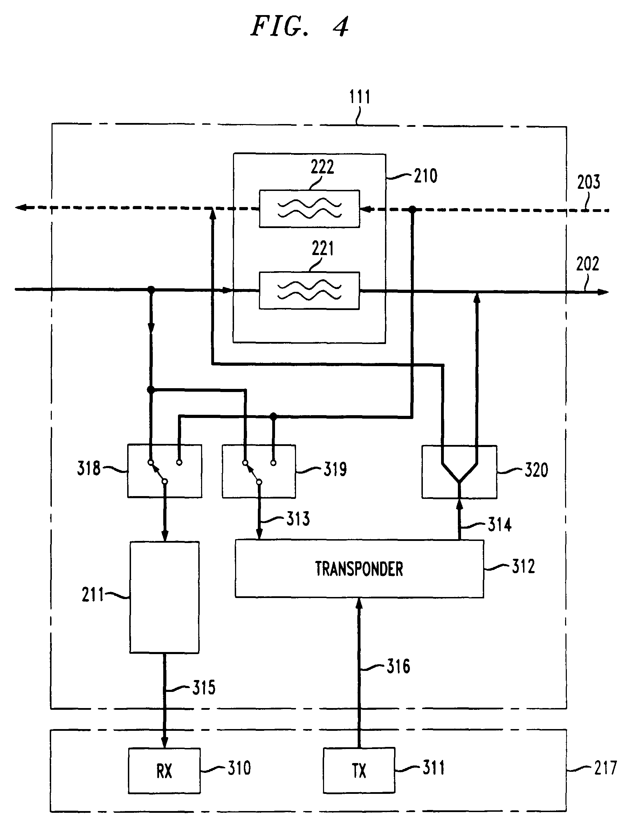

With reference to Fig. 4, there is shown a diagram of the switch units 318 and 319 and splitter 320 at node 111. Switch unit 318 includes a 1X2 optical selector switch to selectively drop the wavelength(s) from either the service path 202 or protection path 203 to the user equipment 217, based on the quality of the signal, e.g., power level. Switch unit 319 includes a 1X2 optical selector switch used to select the CW wavelength signal from either the service path 202 or protection path 203 for use by transponder 312, based on the power level of the signal. As was described in Fig. 2, splitter 320 splits (bridges) the modulated signal 314 which is then added to both the service path 202 and protection path 203. Alternatively, the unit 320 may be implemented as a 1X2 selector switch to switch the modulated signal 314 to either the service path 202 or protection path 203. While the use of a selector switch saves 3dB of power, it adds complexity and may sacrifice switching and reconfiguration speed when the modulated signal needs to be switched between the service path 202 and protection path 203 or vice-versa. The selection of the path would be based on a control signal from the system controller 300 at hub 102, when protection switching needs to occur as a result of a failure elsewhere in the ring.

According to another aspect of our invention, a separate supervisory signaling wavelength, from supervisory signal unit 303, may be used for each access terminal 111 - 114 to provide supervisory signaling. Alternatively, a common wavelength may be used for broadcasting common supervisory signaling, to all of the access terminals 111 - 114. In such an arrangement, sub-carriers and/or message addressing may be used to carry specific supervisory signal information to each access terminal. Note, the wavelength of the supervisory signal must be different from the wavelengths of the modulated wavelengths of TX-OTUs 202, 204 and carrier wave (unmodulated) wavelengths of lasers 301, 302. In another embodiment of our invention, a tag can be carried with each wavelength for each access terminal.

Another feature of the invention enables a controller 300 to control the number and assignment of wavelengths generated by the CW lasers 301 and 302. In this manner controller ensures that the CW wavelengths are different from the modulated wavelengths used by TX-OTUs 202 and 204 and the supervisory wavelengths of supervisory unit 303. Additionally, controller 300 signals, via the supervisory signal from supervisory unit 303, the number and frequency of each wavelength assigned to each access terminal 111 - 114. In this manner, controller 300 provides dynamic wavelength assignment control over all of the wavelengths utilized by the system of Fig. 3. Controller 300 may also communicate with controllers in other LSO units 102 - 106 of IOF ring 101 or with a centralized network operations controller to coordinate the assignment of wavelengths used by the system of Fig. 3.

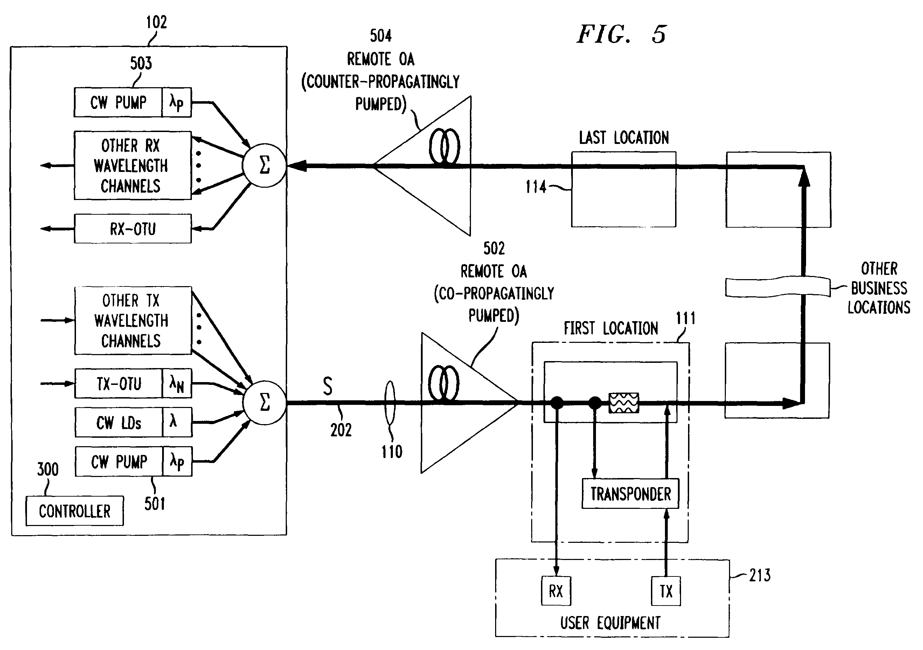

According to another aspect of our invention, Fig. 5 shows an illustrative block diagram of an amplified WDM access ring 110 including hub based optical pumping. Since the access ring 110 is a short-haul loop and since the number of access terminals 111 - 114 is not large, it may be possible to provide sufficient optical power at the hub 102 to ensure the desired signal to noise ratio and other operating characteristics throughout the access ring 110. Otherwise if optical gain is needed, an Erbium doped fiber (EDF) or other rare earth doped fiber or Raman optical amplifiers 502 and 504 may be used to provide additional optical signal gain needed to compensate for signal loss in the service S path of access ring 110. At the hub 102 location, a CW pump 501 is used to co-propagatingly pump (provide the optical power for) the EDF or Raman optical amplifier 502 located prior to the first terminal location 111. At hub 102 location, a CW pump 503 is used to counter-propagatingly pump (provide the optical power for) the EDF or Raman optical amplifier 504 located after the last terminal location 114. Obviously, the CW pumps 501 and 503 may be used to provide the power for the EDF or Raman optical amplifiers of the protection path P (not shown) of access ring 110.

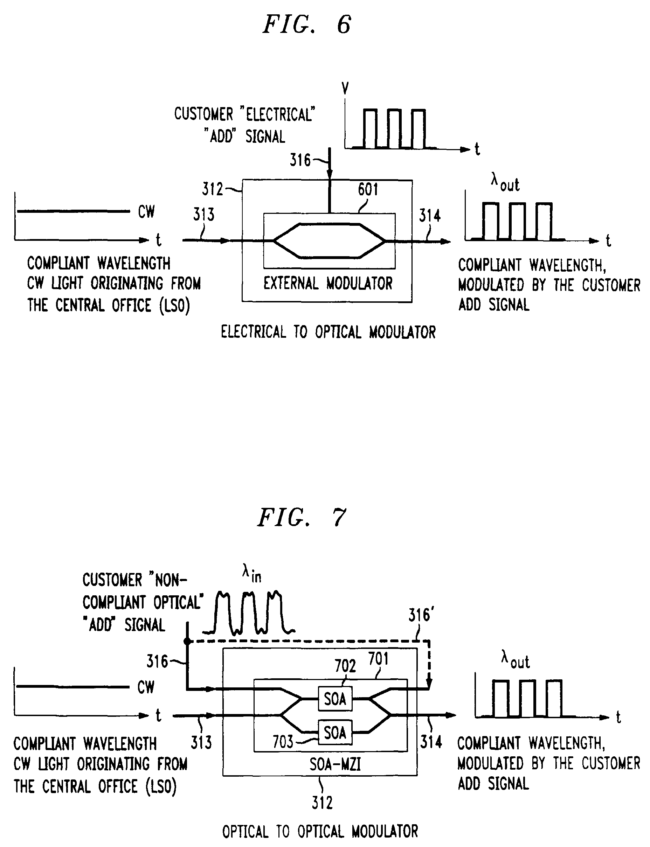

Fig. 6 shows, illustratively, an embodiment of an electrical signal to optical signal (E/O) modulator used as a transponder 312 of Fig. 3 at an access terminal to modulate the CW signal using an electrical transmit signal from the user. The E/O modulator 601 may be, illustratively, a well known electro-absorption modulator, a Mach-Zehnder modulator, etc. One illustrative E/O modulator is described in the article by B. Mikkelsen et al "Opto-electronic and all-optical wavelength translators and their cascadability," Proc. Of OFC/IOOC'99, invited paper FJ1, San Diego, Feb. 1999. This reference, however, assumes a local laser source provides the CW signal for the modulator. In our invention, the CW laser is located at the hub 102. In operation, the CW signal 313 enters the E/O modulator 601 and is modulated, in a well known manner, by the users electrical transmit signal 316 to form the modulated user transmit signal 314, at the appropriate (assigned) wavelength.

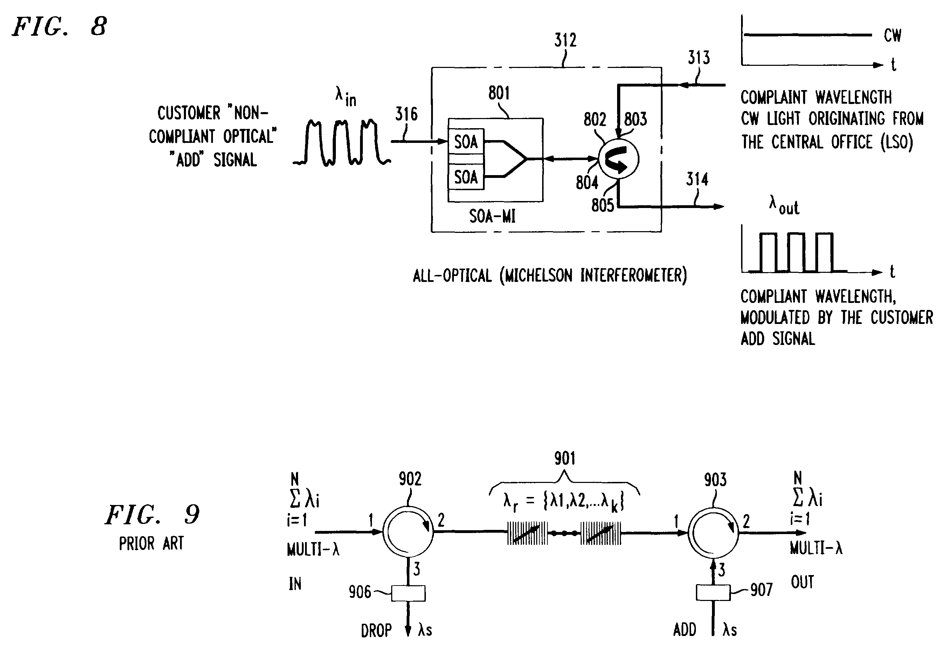

Fig. 7 shows, illustratively, an embodiment of an optical signal to optical signal (O/O) modulator for use as a transponder 312 of Fig. 3 to modulate the CW signal 313 using an optical transmit signal 316 from the user. The O/O modulator 701 may be embodied, illustratively, in a well known manner using a Mach-Zehnder interferometer (MZI) implemented using Silicon Optical Amplifier (SOA) type optical cross-phase modulator devices. The O/O modulator 701 includes two SOAs 702 and 703 to maintain balance in the Mach-Zehnder interferometer. An illustrative O/O modulator is also described in the above-referenced Mikkelsen et al article. In operation, the CW signal 313 enters the O/O modulator 701 and is modulated by the users or customers modulated optical transmit signal 316, in SOA 702, to form the modulated CW signal 314. The wavelength frequency of the users modulated optical signal is generally a non-compliant optical signal. For example, the non-compliant optical signal 316 can be a modulated optical signal at a wavelength that is different from the CW signal 313, the same wavelength as the CW signal 313 but less stable, or may be an modulated light emitting signal (LED). In a well known manner, the SOA 702 transfers the modulation from the customer's non-compliant optical signal 316 to the CW signal 313 to form the modulated CW signal 314.

According to another embodiment shown in Fig. 7, the customer's modulated optical transmit signal is applied in a counter-propagating manner via path 316' (the dotted line path) to one of the interferometer branches at the output side of the modulator 701. The advantage to this embodiment is that any residual signal at the customer's modulated optical signal will not be directed to the output port 314. The rest of the operation of this embodiment is the same as described in the above paragraph.

Fig. 8 shows, illustratively, another embodiment of an O/O modulator 801 for use as a transponder 312 of Fig. 3 to modulate the CW signal using an optical transmit signal from the user or customer. The transponder 312 includes O/O modulator 801 and circulator 802. The O/O modulator 801, may be, illustratively, a well known optical Michelson interferometer described in the above-referenced Mikkelsen et al article. The CW signal 313 enters port 803 of circulator 802 and exits port 804 to interferometer 801 and is modulated by the customer's modulated optical transmit signal 316 to form a modulated CW signal. The modulated CW signal exits the interferometer 801, enters port 804 and exits port 805 of circulator 802 as a modulated CW signal 314. Again the wavelength of the users modulated optical signal 316 may be a non-compliant optical signal.

The optical add/drop multiplexer (OADM) used as OADM 201 at the hub node (LSO 102) and OADM 210 at access terminals, such as 111, is a critical component of metropolitan area optical networking. A number of technology/architecture options for OADM implementation is well known in the art, two examples are described in the following paragraphs.

The first example is based on back-to-back multiplexing where all of the wavelengths are demultiplexed, separated and then remultiplexed together. In addition to multiplexing/demultiplexing losses that need to be compensated for by external optical amplifiers, there are other impairments that deteriorate the signal if the express wavelength channels (also referred to as "through" or "pass" channels) are demultiplexed and recombined at every hub node (LSO). Impairments such as filter bandwidth narrowing and multi-path interference must be particularly considered in the design. The second example provides an efficient method for OADM implementation and entails accessing only the add/drop channels without significantly affecting (except for added loss) the express wavelengths. This requires tunable/switchable filters that allow demultiplexing of only the local add/drop channels.

Shown in Fig. 9 is an OADM that uses tunable/switchable filters that allow demultiplexing of only the local add channels. Such an OADM is described in the article by C. R. Giles and V. Mizrahi, "Low loss ADM for DWDM Lightwave Networks," IOOC"95, Paper ThC2-1. As depicted in Fig. 9, a number of tunable (or switchable) Fiber Bragg Gratings (FBG) 901 are sandwiched between two optical circulators 902 and 903. At least one FBG grating 901 is used for each wavelength (of the set of wavelengths in the WDM signal) that needs to be added or dropped. The FBGs 901 reflect the add/drop wavelengths and pass the express (or through) wavelengths with little impairment. The reflected (drop) wavelengths are dropped at port 3 of circulator 902 and need to be further separated in demultiplexer 906 to feed the receive circuits e.g., RX-OTU 211 or transponder 312 of Fig. 3. The "add" wavelengths are combined in a multiplexer or combiner and inserted in the "add" port 3 of circulator 903. The added wavelengths are reflected by the appropriate wavelength gratings of FBG 901 and exit port 2 of circulator 903. Several variations of this basic architecture have been proposed for an OADM and for optical cross-connect applications that used series or parallel FBGs ( For example see the article by Chen, Y. K., et. al., Fiber Bragg Grating-Based Large Nonblocking Multiwavelength Cross-Connects," Jour. Lightwave tech., Vol. 16, No. 10, pp.1746-1755,Oct. 1998).

As discussed with reference to splitter 320 in Figs. 3 and 4, the node 111 modulated signal 314 must be split (or duplicated by some means) and added to both service path 202 and the protection path 203. If a 3 dB splitter is used for this purpose, undesirably, there will be a 3 dB power penalty for this signal splitting. As also noted, a 1x2 switch may be used to selectively add the signal to either the service path 202 and the protection path 203, but, undesirably, this adds to control complexity.

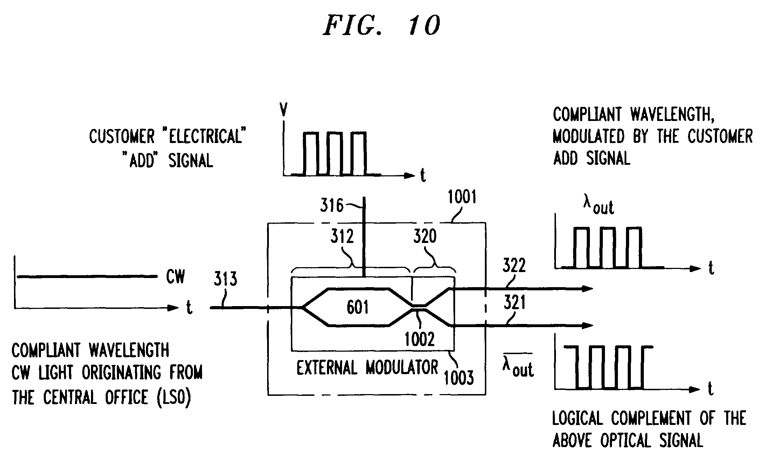

In accordance with the present invention, Fig. 10 shows an illustrative embodiment of an electrical/optical transponder 1001 having complementary outputs. The transponder 1001 is in principle a combination of the previously described transponder 312 and splitter 320. The transponder 1001 performs power splitting without the 3dB penalty of splitter 320. Transponder 1001 is formed using a combiner/splitter that is an interferometric-type 3dB (50/50) coupler 1002 at the output side of the modulator 601 of Fig. 6 to form a dual output modulator device 1003. Note, the combiner element of modulator 601 and splitter 320 are joined to form a single 2X2 combiner/splitter element 1002. The first output 322, λₒᵤₜ, is the customers modulated signal 314 but at the CW wavelength and the second output 321 is the binary (or logical) compliment of the customers modulated signal at the CW wavelength. Using this arrangement, none of the energy from the CW signal 313 would be lost (in the cladding) when the customers signal 316 is OFF (binary zero), but instead, this energy will appear at the second output 321.

Of course, while the customers modulated signal 322 that arrives at the hub node 102 over the service path 202 represents the customers "true" (digital) signal 316, the compliment of the customers modulated signal 321 that arrives at the hub node over the protection path 203 represents the complement of the customers signal 316. In U.S. Patent No. 4,878,726, issued on Nov 7, 1989 to M. T. Fatehi, there is disclosed a system that transmits the true signal and the complementary signal over two different optical paths (i.e., our service and protection paths) and a receiver that selects either the true signal or the complementary signal to retrieve the modulating (i.e., customer's) signal. This arrangement can be utilized at the receivers (e.g., 203, 205) at he hub node 102 to select either the true signal or the complementary signal to be demodulated to recover the customer's signal 316.

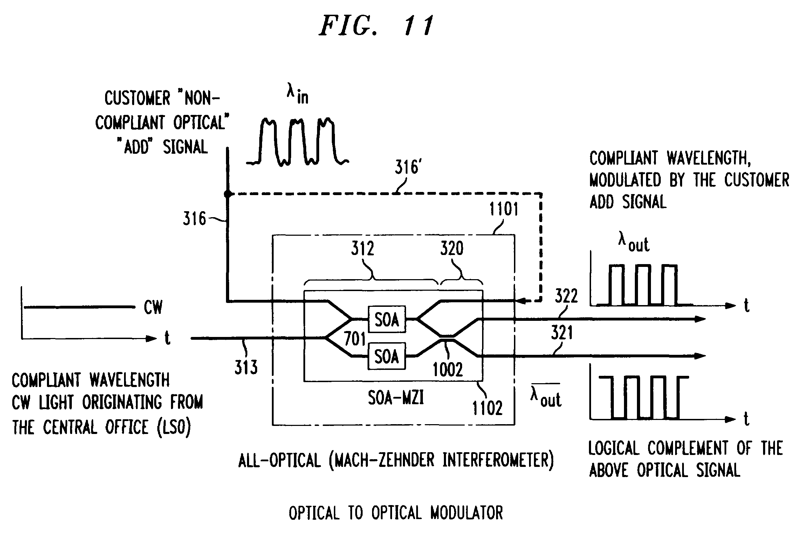

Fig. 11 shows, in accordance with the present invention, a first and second illustrative embodiment of an optical/optical (O/O) transponder 1101 having complementary outputs. The transponder 1101 is in principle a combination of the previously described O/O modulator 701 type transponder 312 and splitter 320. The transponder 1101 performs power splitting without the 3dB penalty of splitter 320. Transponder 1101 is formed using an interferometric-type 3dB (50/50) coupler 1002 as the combiner/splitter element in the output side of the O/O modulator 701 of Figs 7 to form a dual output modulator device 1102.

In an alternative arrangement the customer's modulated optical transmit signal is applied in a counter-propagating manner via path 316' (the dotted line path) to one of the interferometer branches at the output side of the modulator 701. The advantage to this embodiment is that any residual signal at the customer's modulated optical signal will not be directed to the output port 314. The rest of the operation of this embodiment is the same as described in the above paragraph.

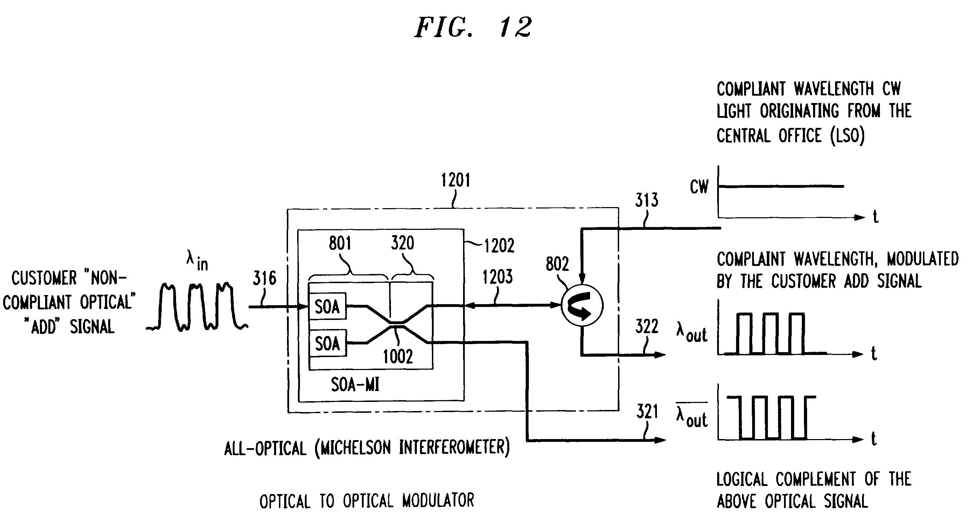

Fig. 12 shows, in accordance with the present invention, a third illustrative embodiment of an O/O transponder 1201 having complementary outputs without the 3dB penalty of splitter 320. The transponder 1201 is a combination of the previously described O/O modulator 801 type transponder 312, splitter 320, and circulator 802. The dual output modulator device 1202 is formed from a combination of the previously described O/O modulator 801 and splitter 320, where an interferometric-type 3dB (50/50) coupler 1002 is used as both the combiner element at the output side of the of O/O modulator 801 and the splitter 320. The customer's modulated signal 322 exits a first output of device 1202 travels via path 1203 to circulator 802 and exits circulator 802 as shown. The complementary customer's modulated signal 321 exits a second output of device 1202.

## Claims

1. A wavelength division multiplexed (WDM) ring system including a central node and one or more access nodes connected over an optical fiber facility, the system further comprising
at the central node
a transmitter unit for transmitting a plurality of unmodulated optical wavelengths over the facility to the at least one access node and
a receiver unit for receiving a plurality of node modulated optical wavelengths over the facility from the at least one access node, said plurality of node modulated optical wavelengths being formed from said unmodulated optical wavelengths that have been modulated at said at least one access node; and
each of said at least one access node including
an optical add/drop multiplexer for receiving at least one of said unmodulated optical wavelengths and for transmitting at least one of the node modulated optical wavelengths over the facility and
means for modulating said at least one of the unmodulated optical wavelengths transmitted to form said at least one of the node modulated optical wavelengths.

2. The wavelength division multiplexed (WDM) ring system of claim 1
wherein said transmitter unit transmits a plurality of modulated optical wavelengths over the facility to said at least one access node and
wherein each of said at least one access node includes
means for receiving and demodulating at least one of said modulated optical wavelengths.

3. The system of claim 1 or claim 2 wherein the central node further includes
a controller unit for assigning the wavelengths of the unmodulated optical wavelengths and for signaling each of said at least one access node of the assignment.

4. The system of claim 3 wherein the controller unit also controls the number of unmodulated optical wavelengths assigned to each of said at least one access node.

5. The system of any of the preceding claims wherein the transmitter unit at the central node further includes
a supervisory signal transmitter for transmitting a supervisory signal over the fiber facility to said at least one access node.

6. The system of claim 5 wherein the supervisory signal transmitter transmits a unique supervisory signal for each access node of the system.

7. The system of any of the preceding claims further comprising
an optical amplifier connected to the facility for amplifying the transmitted first and a second group of wavelengths sent over the facility.

8. The system of claim 7 wherein the optical amplifier is remotely pumped from the central transmitter unit and wherein
the central transmitter unit further includes a carrier wave pump signal which is sent over the facility and utilized to pump the optical amplifier.

9. The system of any of the preceding claims wherein at least one access node includes
a transponder unit including
an electrical signal to optical signal (E/O) modulator for receiving a customer's electrical signal and for modulating at least one of the second number of the unmodulated optical wavelengths and sending the resulting node modulated wavelength over the facility.

10. The system of claim 9 wherein the E/O modulator includes an interferometric-type coupler connected to an output side of the E/O modulator for forming the node modulated signal which is sent over a first path of the facility and a complement of the node modulated signal which is sent over a second path of the facility.

11. The system of any of the preceding claims wherein at least one access node includes
a transponder unit including
an optical signal to optical signal (O/O) modulator for receiving a customer's optical signal and for modulating at least one of the second number of the unmodulated optical wavelengths and sending the resulting node modulated wavelength over the facility.

12. The system of claim 11 wherein the O/O modulator includes a Mach-Zehnder interferometer.

13. The system of claim 11 wherein the O/O modulator includes a Michelson interferometer.

14. The system of claim 11 wherein the O/O modulator further includes an interferometric-type coupler connected to an output side of the E/O modulator for forming the node modulated signal which is sent over a first path of the facility and a complement of the node modulated signal which is sent over a second path of the facility.

15. The system of any of the preceding claims wherein at least one node of said at least one access node receives at least one unique unmodulated wavelength.

16. The system of any of the preceding claims wherein said optical add/drop multiplexer at a node is implemented using a drop circulator for outputting dropped wavelengths to a customer, a plurality of Fiber Bragg Gratings (FBG) for selecting add/drop wavelengths at the node, and an add circulator for inputting added wavelengths from the customer.

17. A method of controlling a wavelength division multiplexed (WDM) ring system including a central node and one or more access nodes connected over a fiber facility, the method comprising the steps of:
at the central node, transmitting a plurality of unmodulated optical wavelengths over the facility to at least one access node;
at each of the at least one access node, receiving the unmodulated optical wavelengths transmitted by the central node and
transmitting the modulated optical wavelengths formed by modulating the received unmodulated optical wavelengths transmitted from the central node;
at the central node, receiving the modulated optical wavelengths over the facility from the one or more access nodes.

18. Apparatus adapted for use as the central node in a wavelength division multiplexed (WDM) ring system as set out in any of claims 1 to 16.

19. Apparatus adapted for use as one of said one or more access nodes in a wavelength division multiplexed (WDM) ring system as set out in any of claims 1 to 16.
